# DEMANDE DE BREVET EUROPEEN

(11) **EP 1 241 146 A1**
(43) Date de publication de la demande: **18.09.2002**
(21) Numéro de dépôt: 02075833.0
(22) Date de dépôt: 04.03.2002
(51) Int. Cl.: C03C 17/00, B41M 1/34

(54) **Procédé de marquage sur la surface d'un objet réalisé en un matériau à base de silice et produit de marquage**

(30) Priorité: 13.03.2001 FR 0103412
(71) Demandeur: Koninklijke Philips Electronics N.V., 5621 BA Eindhoven (NL)
(72) Inventeur: Gueusquin, Eric, 75008 Paris (FR)
(74) Mandataire: de la Fouchardière, Marie-Noelle

(57) **Abrégé**

L'invention propose un procédé de marquage sur un corps en verre (14), caractérisé en ce qu'il inclut les étapes suivantes :
- réalisation d'une marque (12) sur le corps en verre (14) par dépôt, directement sur la face externe du corps (14), d'un produit de marquage (10) réalisé à partir d'un mélange sensiblement homogène d'une encre, destinée au marquage sur du verre, et d'une poudre de silice ;
- vitrification du produit de marquage (10) sur la face externe du corps (14) par chauffage à très haute température.

L'invention propose aussi un produit de marquage (10) pour la mise en oeuvre du procédé selon l'invention, caractérisé en ce qu'il comporte un mélange sensiblement homogène d'encre et d'une poudre de silice.

## Description

La présente invention concerne un procédé de marquage sur une surface d'un objet réalisé en un matériau à base de silice, par exemple un corps en verre d'une ampoule d'éclairage.

Au cours de la fabrication d'une ampoule d'éclairage qui comporte un corps en verre, par exemple en forme de tube, une marque d'identification est généralement apposée sur un élément de l'ampoule.

Cette marque comporte par exemple, sous forme de caractères typographiques, des indications sur les caractéristiques techniques de l'ampoule, sur le nom du fabriquant, etc. qui permettent d'identifier facilement chaque modèle d'ampoule, notamment lors de son emballage, lors de son installation et lors de son remplacement.

La marque représente un graphisme qui doit notamment être lisible et facilement repérable sur le tube.

Le tube en verre de certaines ampoules d'éclairage, tels que les ampoules du type halogène, atteignent des températures très élevées en fonctionnement, par exemple de l'ordre de 800°C.

Les encres de marquage sur le verre ne résistent pas à ces hautes températures. Elles sont généralement prévues pour supporter une température maximale permanente de 500°C.

Par conséquent, comme on ne peut pas appliquer la marque directement sur le corps en verre de l'ampoule, on prévoit un support, généralement en céramique, qui est solidaire du tube en verre et sur lequel on dépose l'encre de marquage.

La température du support en céramique restant bien inférieure à la température du tube en verre, lorsque l'ampoule d'éclairage fonctionne normalement, la chaleur produite par le tube ne détériore pas l'encre qui est alors soumise à une température proche de celle de la céramique, par exemple 300°C.

Cependant, l'emploi d'un support en céramique augmente le coût de fabrication de l'ampoule d'éclairage.

De plus, le montage du support sur le tube en verre et son marquage requièrent des étapes spécifiques au cours du procédé de fabrication des tubes, ce qui rend le procédé de fabrication complexe et augmente la durée de la fabrication.

Un autre inconvénient du support est son encombrement.

L'invention vise à remédier à ces inconvénients en proposant un procédé de marquage qui permette d'appliquer un produit de marquage directement sur une surface externe du corps en verre de l'ampoule d'éclairage, sans qu'il soit nécessaire de prévoir un support.

Dans ce but, l'invention propose un procédé de marquage sur une surface d'un objet réalisé en un matériau à base de silice, caractérisé en ce qu'il inclut les étapes suivantes :
- réalisation d'une marque sur ladite surface par dépôt d'un produit de marquage réalisé à partir d'un mélange sensiblement homogène d'une encre et d'une poudre de silice ;
- vitrification du produit de marquage sur ladite surface par chauffage à très haute température.

Selon d'autres caractéristiques de l'invention :
- le produit de marquage est déposé sur la surface de l'objet préalablement à une mise en forme finale dudit objet, laquelle mise en forme finale comporte une phase de chauffage à très haute température qui provoque la vitrification du produit de marquage sur la surface de l'objet ;
- l'objet a globalement la forme d'un tube rectiligne avant sa mise en forme finale, la mise en forme finale de l'objet comprenant une phase dite de cintrage au cours de laquelle l'objet est chauffé à très haute température en vue d'être cintré, et ladite vitrification du produit de marquage est obtenue au cours de la phase de cintrage ;
- le produit de marquage est déposé sur la surface de l'objet au moyen d'un tampon de marquage destiné à prélever le produit de marquage dans une empreinte gravée en creux représentant le motif de la marque ;
- le produit de marquage comporte un produit diluant ;
- le produit de marquage comporte un produit durcisseur ;
- on prépare le produit de marquage en mélangeant de manière homogène, selon des proportions en poids, environ 81% d'encre, 3% de poudre de silice, 12% de produit diluant et 4% de produit durcisseur.

L'invention propose aussi un produit de marquage pour la mise en oeuvre du procédé selon l'invention, caractérisé en ce qu'il comporte un mélange sensiblement homogène d'encre et de poudre de silice.

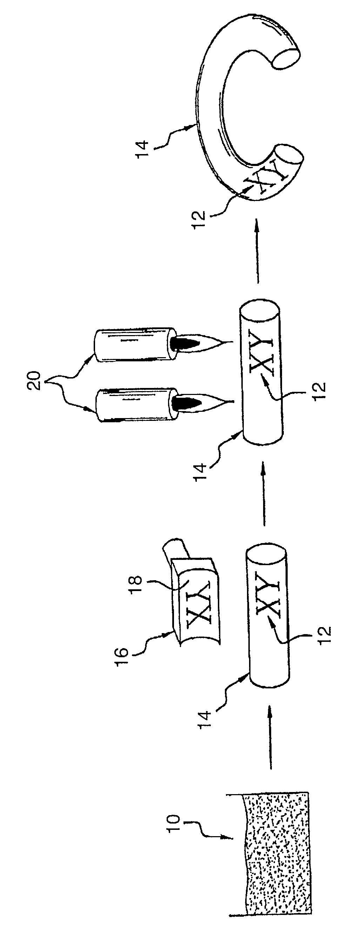

D'autres caractéristiques et avantages de l'invention apparaîtront à la lecture de la description détaillée qui suit pour la compréhension de laquelle on se reportera aux dessins annexés dans lesquels la figure unique est un schéma qui illustre un procédé de marquage conforme aux enseignements de l'invention.

La figure unique représente le mode préféré de mise en oeuvre du procédé de marquage selon l'invention.

Pour mettre en oeuvre ce procédé on prépare un produit de marquage 10 spécifique en mélangeant, de manière sensiblement homogène, une encre de marquage, une poudre de silice, un produit diluant et un produit durcisseur.

Avantageusement, on utilisera une encre noire qui est prévue pour le marquage sur du verre, par exemple le modèle référencé « GL 073 » de la société « Marabuwerke Gmbh & Co ».

L'encre comporte notamment une matière solide, ou pigment, ici de couleur noire, et de la matière organique.

Pour la poudre de silice, on choisira par exemple le produit référencé « Aérosil 200 » de la société « Degussa ».

Pour le diluant, on choisira par exemple le produit référencé « SGLV » de la société « Marabuwerke Gmbh & Co ».

Pour le durcisseur, on choisira par exemple le produit référencé « SGLH » de la société « Marabuwerke Gmbh & Co ».

Avantageusement, les proportions en poids de chaque ingrédient dans le mélange constituant le produit de marquage 10 sont de :
- 81% d'encre ;
- 3% de poudre de silice ;
- 12% de produit diluant ;
- 4% de produit durcisseur.

On note que la tolérance à respecter dans ces proportions est d'environ 10%, mais on peut ajouter plus de produit diluant de manière à augmenter la fluidité du produit de marquage 10 en vue d'en faciliter le dépôt.

De préférence, on dépose ensuite le produit de marquage 10, sous la forme d'une marque 12 représentant des caractères typographiques alphanumériques, sur une surface externe de l'objet destiné à être marqué, qui est ici à titre d'exemple un tube en verre 14 sensiblement rectiligne d'une ampoule d'éclairage, avant sa mise en forme finale.

Pour les ampoules d'éclairage du type halogène, le verre du tube 14 est généralement appelé quartz car il est réalisé à partir de silice sensiblement pure et amorphe.

Les moyens mis en oeuvre pour apposer la marque 12 sur la surface de verre sont similaires à ceux qui sont utilisés habituellement pour réaliser une marque sur un corps en verre avec l'encre de marquage employée ici.

Avantageusement, le produit de marquage 10 sera déposé au moyen d'une machine dite de « tampographie », par exemple la machine « Tampoprint », modèle « TT 50/31 », qui comporte des tampons 16, ou gommes, en caoutchouc et des plaques métalliques gravées en creux de 22µm à 24µm de profondeur.

Selon une utilisation classique de cette machine, le motif du marquage est donc gravé en creux dans une plaque métallique, puis on étale le produit de marquage 10 sur la face gravée de la plaque et on racle le surplus de produit 10.

On presse ensuite la face de marquage 18 d'un tampon 16 en caoutchouc contre la face gravée, de sorte que le produit de marquage 10 adhère à la face de marquage 18 en dessinant un négatif du motif de la marque 12.

Puis on presse la face de marquage 18 du tampon 16 contre la surface à marquer, ici la surface externe du tube en verre 14, de manière à y déposer le produit de marquage 10 selon un graphisme correspondant à la marque 12 désirée.

Par rapport aux plaques métalliques utilisées habituellement, on peut augmenter la largeur des caractères gravés en vue d'améliorer l'aspect des contours de la marque 12 sur le verre.

On note que le transfert manuel du produit de marquage 10 depuis le tampon 16 sur la surface de verre est possible, mais il ne permet pas d'obtenir la régularité de positionnement souhaitée.

On constate que le produit de marquage 10 sèche rapidement après son dépôt sur le tube en verre 14, la marque 12 formant alors un dépôt en relief sur la surface externe du tube en verre 14.

Le tube 14 est ensuite acheminé vers une source de chauffage qui est ici constituée par des chalumeaux d'arrondissage 20 qui servent à la mise en forme finale du tube 14, lors d'une phase dite « d'arrondissage », ou de cintrage, au cours de laquelle on cintre le tube 14.

Pendant le transport du tube 14 vers les chalumeaux 20, le tube 14 peut être en contact avec d'autres tubes 14 ou avec des surfaces rigides. Comme le produit de marquage 10 formant la marque 12 n'a pas encore subi de traitement thermique, les frottements ou les chocs de la surface du tube 14 comportant la marque 12 avec d'autres surfaces pourraient provoquer l'altération ou l'effacement de la marque 12. C'est pourquoi, de préférence, le produit de marquage 10 comporte un produit durcisseur qui confère à la marque 12 des propriétés de résistance aux frottements et aux chocs.

Au cours de la phase d'arrondissage du tube 14, on soumet le tube en verre 14 et sa marque 12 à un traitement à très haute température, ici une température supérieure à 1800°C, pendant environ trois à cinq secondes.

Le traitement à très haute température est réalisé par les chalumeaux 20 qui chauffent le tube 14 de manière à pouvoir lui donner par exemple une forme globalement torique.

Ce traitement à très haute température provoque simultanément la vitrification du produit de marquage 10 à la surface du verre. En effet, pendant ce traitement à très haute température, les particules de silice fondent en emprisonnant les cendres du pigment de l'encre de marquage.

Le passage de la marque 12 à très haute température dans un milieu très réactif, comme l'est la flamme hydrogène/oxygène produite par un chalumeau d'arrondissage 20, rend les éléments subsistant du produit de marquage 10 inaltérables à la température de fonctionnement classique d'une ampoule d'éclairage du type halogène, c'est à dire environ 800°C.

Le traitement à très haute température constitue, pour la marque 12, une phase de cuisson aboutissant à sa vitrification.

Les matières organiques contenues dans l'encre de marquage sont pratiquement entièrement détruites lors du traitement à très haute température. Elles sont dégradées en dioxyde de carbone et en eau.

Lorsque le tube 14 redescend à la température ambiante, il reste la silice et le pigment dégradé qui sont vitrifiés à la surface externe du tube en verre 14. Le produit de marquage 10 est donc lié intimement à la surface externe du tube 14.

Selon une variante de réalisation (non représentée) de l'invention, la marque 12 est apposée sur le corps en verre 14 de l'ampoule postérieurement à sa mise en forme finale.

Le tube 14 subit donc d'abord la phase d'arrondissage puis on appose la marque 12 sur le tube 14 de forme torique. On soumet ensuite la marque 12 et le tube 14 à une très haute température, par exemple 1800°C, de manière à vitrifier le produit de marquage 10 à la surface du tube 14.

On note que, selon cette variante du procédé selon l'invention, la vitrification de la marque 12 constitue une étape distincte, alors que, dans le mode de mise en oeuvre du procédé décrit précédemment, l'étape de vitrification est simultanée avec l'étape d'arrondissage du tube en verre 14.

La marque 12 réalisée avec le procédé de marquage selon l'invention forme une trace translucide, correspondant au motif d'impression initial.

On constate que, après la vitrification, il est impossible d'effacer la marque 12 autrement qu'en enlevant une couche superficielle de matière.

On note que lors de la préparation du mélange formant le produit de marquage 10, l'ordre d'intégration des composants dans le mélange n'a pas d'influence nette sur la qualité finale de la marque 12 après sa vitrification.

Après la vitrification de la marque 12, on peut poursuivre la fabrication de l'ampoule d'éclairage de manière classique, en agençant à l'intérieur du tube 14 les divers éléments nécessaire à la réalisation d'une ampoule du type halogène, tels qu'un filament en tungstène, des connecteurs électriques et des composés gazeux, avant de souder les extrémités axiales du tube en verre 14.

Le procédé selon l'invention permet de supprimer le support en céramique qui constituait un composant coûteux de l'ampoule d'éclairage.

Auparavant, la présence des pièces de support en céramique gênait le positionnement des connecteurs électriques de branchement de l'ampoule lors du soudage des extrémités axiales du tube en verre 14. La suppression du support améliore donc le contrôle de la position des connecteurs électriques.

Non détectable visuellement sur une ampoule en fonctionnement, la marque 12 est visible ampoule éteinte, sur un fond clair.

Grâce au procédé selon l'invention, il est possible d'automatiser facilement le marquage sur le tube en verre 14 d'une ampoule d'éclairage.

Le procédé de marquage selon l'invention offre l'avantage de s'insérer dans la chaîne de fabrication.

Le procédé de marquage selon l'invention s'insère dans le procédé classique de fabrication des tubes 14 sans perturber le procédé d'arrondissage des tubes 14, puisque l'on a constaté que la vitrification du produit de marquage 10 n'avait pas d'incidence sur la qualité de fabrication du tube en verre 14. En particulier, en effectuant des tests sur la durée de vie d'une ampoule comportant un tube en verre 14 marqué par un procédé selon l'invention, on ne décèle pas de trace de recristallisation du quartz formant le tube 14.

On a constaté que, même après plus de mille heures de fonctionnement de l'ampoule d'éclairage, la marque 12 réalisée à l'aide du procédé selon l'invention ne perd ni en lisibilité des caractères, ni en résistance à l'effacement.

Si l'invention a été décrite dans le cadre de son application au marquage d'une ampoule d'éclairage, il va de soi qu'un procédé selon l'invention peut être utilisé dans de nombreuses autres applications où une surface de quartz d'un objet de nature quelconque, comme une plaque, une lentille ou encore un récipient, accessible à un tampon de marquage et à un système de cuisson permettant la vitrification d'un dépôt réalisé par tampographie, est destinée à recevoir une marque d'identification.

## Revendications

1. Procédé de marquage d'une surface d'un objet (14) réalisé en un matériau à base de silice, **caractérisé en ce qu'**il inclut les étapes suivantes :
- réalisation d'une marque (12) sur ladite surface de l'objet (14) par dépôt d'un produit de marquage (10) réalisé à partir d'un mélange sensiblement homogène d'une encre et d'une poudre de silice ;
- vitrification du produit de marquage (10) sur ladite surface par chauffage à très haute température.

2. Procédé selon la revendication 1, **caractérisé en ce que** le produit de marquage (10) est déposé sur la surface de l'objet (14) préalablement à une mise en forme finale dudit objet, laquelle mise en forme finale comporte une phase de chauffage à très haute température qui provoque la vitrification du produit de marquage (10) sur la surface de l'objet (14).

3. Procédé selon la revendication 1, selon lequel l'objet (14) a globalement la forme d'un tube rectiligne avant sa mise en forme finale, **caractérisé en ce que** la mise en forme finale comprend une phase dite de cintrage au cours de laquelle l'objet (14) est chauffé à très haute température en vue d'être cintré, et **en ce que** ladite vitrification du produit de marquage (10) est obtenue au cours de la phase de cintrage.

4. Procédé selon la revendication 1, **caractérisé en ce que** le produit de marquage (10) est déposé sur la surface de l'objet (14) au moyen d'un tampon de marquage (16) destiné à prélever le produit de marquage (10) dans une empreinte gravée en creux représentant le motif de la marque (12).

5. Procédé selon la revendication 1, **caractérisé en ce que** le produit de marquage (10) comporte un produit diluant.

6. Procédé selon la revendication 1, **caractérisé en ce que** le produit de marquage (10) comporte un produit durcisseur.

7. Procédé selon les revendications 5 et 6 prises en combinaison, **caractérisé en ce que** le produit de marquage (10) est obtenu en mélangeant de manière homogène, selon des proportions en poids, environ 81% d'encre, 3% de poudre de silice, 12% de produit diluant et 4% de produit durcisseur.

8. Produit de marquage (10) pour la mise en oeuvre du procédé selon la revendication 1, **caractérisé en ce que** qu'il comporte un mélange sensiblement homogène d'encre et de poudre de silice.
